# EUROPÄISCHE PATENTSCHRIFT

(11) **EP 1 060 931 B1**
(45) Veröffentlichungstag und Bekanntmachung des Hinweises auf die Patenterteilung: **05.11.2003**
(21) Anmeldenummer: 00110658.2
(22) Anmeldetag: 18.05.2000
(51) Int. Cl.: B60J 10/04, B60J 10/06, B60J 1/17

(54) **Stegkappe aus gummielastischem Material**
Pillar cap made of elastic rubber material
Capuchon pour montant en matière élastique

(30) Priorität: 14.06.1999 DE 19926955
(43) Veröffentlichungstag der Anmeldung: 20.12.2000
(73) Patentinhaber: Metzeler Automotive Profile Systems GmbH, D-88131 Lindau/Bodensee (DE)
(72) Erfinder: Hemauer, Stephan, 88147 Achberg (DE)
(74) Vertreter: Preissner, Nicolaus, Dipl.-Ing.

(56) Entgegenhaltungen:
- EP-A- 0 315 423
- DE-A- 3 029 765
- DE-A- 19 906 927
- DE-C- 19 701 681

## Beschreibung

Die vorliegende Erfindung betrifft, gemäß dem oberbegriff des Anspruchs 1, eine Stegkappe aus gummielastischem Material zum Abdichten eines Stegs, der zwischen zwei Scheiben einer rahmenlosen Tür eines Kraftfahrzeugs angeordnet ist, gegenüber einer Türöffnung der Tür. Die Stegkappe ist an einer Oberseite des Stegs angeordnet.

Bei rahmenlosen Türen sind Stege bekannt, die als Trennelement zwischen zwei Scheiben angeordnet sind. Eine stirnseitig auf dem Steg angeordnete Stegkappe dient zum Abdichten gegenüber der Türöffnung. Die bekannten Stegkappen sind zur Befestigung auf den Steg aufgeklebt oder aufvulkanisiert. Nachteilig hierbei ist, daß sich eine sichere Befestigung der Stegkappe nicht erreichen läßt. Weiter überlappt die Stegkappe den Steg und steht nach außen vor. Hierdurch entsteht ein unerwünschter optischer Eindruck.

Aufgabe der vorliegenden Erfindung ist es daher, eine Stegkappe bereitzustellen, die sich bei einem in ästhetischer Hinsicht ansprechenden optischen Eindruck zuverlässig auf dem Steg befestigen läßt.

Erfindungsgemäß ist zur Lösung dieser Aufgabe bei einer Stegkappe der eingangs genannten Art vorgesehen, daß die Stegkappe an der Außenseite und/oder der Innenseite der Tür bündig mit dem Steg abschließt, und daß sie mittels mindestens eines Verankerungselements an dem Steg befestigt ist, wobei das Verankerungselement gegenüber der Umgebung verdeckt und an einem den Steg versteifenden Mittelbereich des Stegs befestigt ist.

Das Verankerungselement ermöglicht eine sichere Befestigung der Stegkappe an dem Steg. Ein unbeabsichtigtes Abziehen oder ein Ablösen im Betrieb werden zuverlässig vermieden. Der Mittelbereich ist bei bekannten Stegen vorhanden und dient zur Versteifung. Ein zusätzliches Bauteil oder große Veränderungen an bekannten Stegen sind nicht erforderlich. Zudem kann auf das bisher erforderliche Überlappen verzichtet werden, so daß sich auch ein besserer optischer Gesamteindruck erreichen läßt. Hierzu trägt auch bei, daß das Verankerungselement gegenüber der Umgebung verdeckt ist. Dieses Verdecken kann durch die Stegkappe und/oder den Steg selbst erfolgen, so daß das Verankerungselement von außen her nicht sichtbar ist. Dies ermöglicht die Verwendung unterschiedlich gestalteter Verankerungselemente ohne Beeinträchtigung des Gesamteindrucks, der durch das bündige Abschließen der Stegkappe an der Außenseite und/oder der Innenseite der Tür etwa durch eine glatte Außenseite beziehungsweise Innenseite geprägt wird.

Vorteilhafte Ausgestaltungen und Weiterbildungen der erfindungsgemäßen Stegkappe gehen aus den abhängigen Ansprüchen hervor.

So ist in vorteilhafter Ausgestaltung das Verankerungselement ein Fuß, der in Hinterschneidungen des Stegs eingreift. Der Fuß wird vorteilhaft zusammen mit der Stegkappe extrudiert, so daß der Herstellungsaufwand gering ist.

Gemäß einer vorteilhaften Weiterbildung ist der Steg mit mindestens einem im Querschnitt im wesentlichen keulenförmigen Ansatz versehen, der von der Stegkappe umgriffen ist. Der mindestens eine keulenförmige Ansatz verhindert ein Abziehen der Stegkappe, so daß eine verbesserte Befestigungswirkung erreicht wird.

Nach einer alternativen vorteilhaften Ausgestaltung ist das Verankerungselement ein an dem Steg befestigter Rastfuß, der einen Einsatz aufweist. Der Rastfuß stellt eine zuverlässige Befestigung der Stegkappe an dem Steg auch bei größeren Belastungen sicher.

In vorteilhafter Weiterbildung weist der Rastfuß eine elastisch bewegliche Rastzunge zum Einrasten in eine Ausnehmung des Stegs auf. Zur Montage wird die Stegkappe einfach auf den Steg aufgesetzt und gegenüber diesem solange verschoben, bis die Rastzunge in die Ausnehmung einrastet. Hierdurch ist eine werkzeuglose und rasche Montage möglich.

Vorteilhaft ist der Einsatz in die Stegkappe einvulkanisiert. Das Einvulkanisieren führt zu einer hochfesten Verbindung zwischen dem Einsatz und der Stegkappe. Gleichzeitig wird der Einsatz unverlierbar an der Stegkappe fixiert. Hierdurch werden die Lagerung und Montage weiter vereinfacht.

Nach einer vorteilhaften Weiterbildung ist der Einsatz mit Ausnehmungen versehen. Diese Ausnehmungen verringern das Gewicht des Einsatzes. Weiter wird die Fixierung zwischen Einsatz und Stegkappe durch die Ausnehmungen verbessert.

Gemäß einer weiteren alternativen Ausgestaltung ist die Stegkappe von einer Kappe überdeckt, die mittels des Verankerungselements an dem Steg befestigt ist. Die Stegkappe wird somit an einem Großteil ihrer Außenseite oder an ihrer gesamten Außenseite von der Kappe zuverlässig gehalten.

Vorteilhaft durchgreift das Verankerungselement die Stegkappe. Die Stegkappe wird dann nicht nur an ihrer Außenseite von der Kappe gehalten, sondern gleichzeitig an ihrer Innenseite von dem Verankerungselement, so daß die Befestigung verbessert wird.

In vorteilhafter Weiterbildung ist die Kappe aus einem Metall hergestellt, insbesondere aus Aluminium. Die Verwendung eines Metalls für die Kappe erlaubt eine Anpassung an die Farbgebung des Stegs ohne Variationen der Stegkappe selbst. Die Stegkappe kann daher in größeren Stückzahlen hergestellt werden. Gleichzeitig ergibt sich durch die farbliche Anpassung an den Steg ein wesentlich verbesserter optischer Gesamteindruck.

Nachstehend wird die Erfindung anhand von Ausführungsbeispielen näher beschrieben, die schematisch in der Zeichnung dargestellt sind. Dabei zeigt:
- Figur 1: eine schematische Seitenansicht einer Tür;
- Figur 2: einen Schnitt längs der Linie II-II in Figur 1 in vergrößerter Darstellung;
- Figur 3: eine perspektivische Ansicht einer ersten Ausführungsform der erfindungsgemäßen Stegkappe;
- Figur 4: einen Schnitt längs der Linie IV-IV in Figur 3;
- Figur 5: eine perspektivische Ansicht einer zweiten Ausführungsform der erfindungsgemäßen Stegkappe;
- Figur 6: einen Schnitt längs der Linie VI-VI in Figur 5 und
- Figur 7: eine perspektivische Ansicht einer dritten Ausführungsform der erfindungsgemäßen Stegkappe.

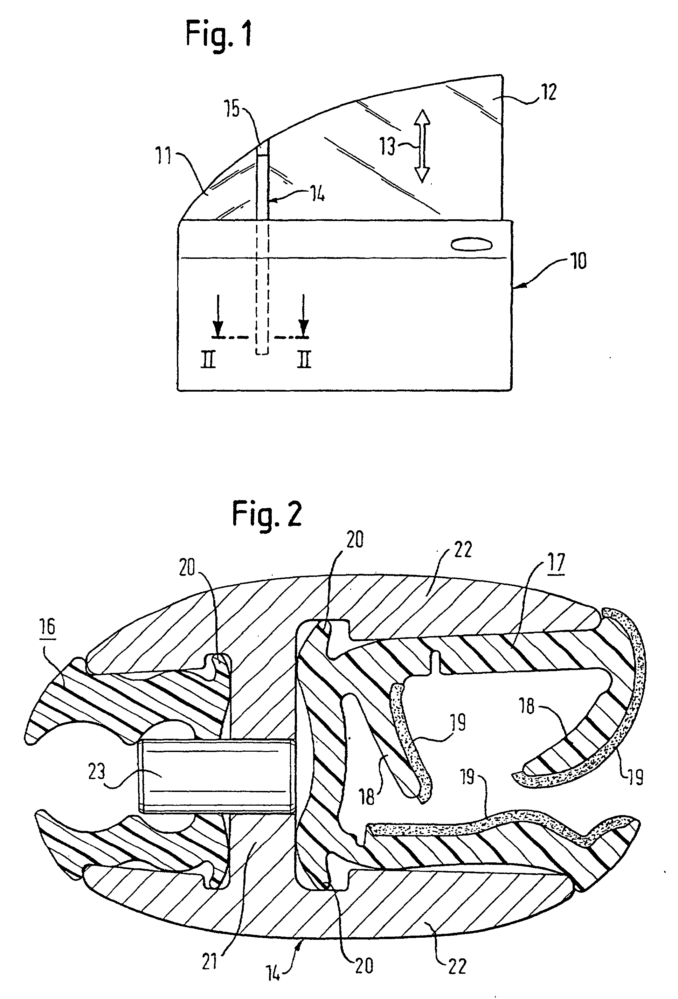

Figur 1 zeigt eine schematische Seitenansicht einer rahmenlosen Tür 10. An der Tür 10 sind zwei Scheiben 11, 12 vorgesehen, die in Pfeilrichtung 13 beweglich sind. Zwischen den Scheiben 11, 12 ist ein Steg 14 angeordnet. Der Steg 14 dient zur Halterung und zur Führung der Scheiben 11, 12. An seiner stirnseite ist der Steg 14 mit einer Stegkappe 15 versehen. Die Stegkappe 15 dient zum Abdichten gegenüber einer nicht näher dargestellten Türöffnung.

Figur 2 zeigt einen Querschnitt durch den Steg 14 unterhalb des Führungsbereichs für die Scheibe 11. Der Steg 14 weist zwei einander gegenüberliegende Seitenbereiche 22 auf, die über einen Mittelbereich 21 verbunden sind. Es ergibt sich ein etwa H-förmiger Querschnitt. An dem Steg 14 sind zwei Profile 16, 17 befestigt. Das Profil 16 wird über Lippen 20 sowie einen Bolzen 23 unbeweglich an dem Steg 14 gehalten. Dieses Profil 16 dient zur Führung der Scheibe 11. An der gegenüberliegenden Seite ist das Profil 17 zur Führung der Scheibe 12 angeordnet. Dieses Profil 17 ist ebenfalls über Lippen 20 befestigt. Zur Abdichtung der Scheibe 12 dienen Dichtlippen 18. Weiter ist eine reibungsmindernde Beschichtung 19 zum Erhöhen der Beweglichkeit der Scheibe 12 und zum Vermeiden von Quietschgeräuschen vorgesehen.

Beide Profile 16, 17 stehen etwas über den Steg 14 vor und sind daher von außen sichtbar. Die Stegkappe 15 ist mit den Profilen 16, 17 verbunden, beispielsweise durch Anheizen. Hierdurch wird ein glatter Übergang zwischen den Profilen 16, 17 und der Stegkappe 15 erreicht.

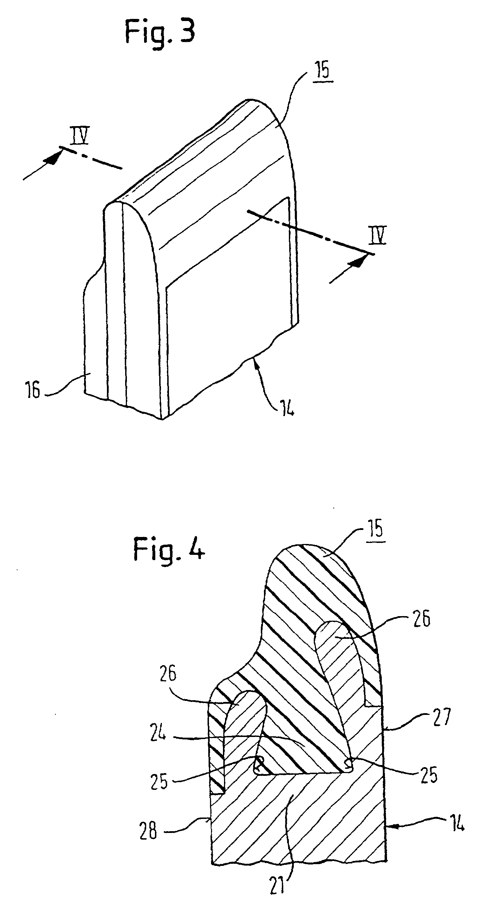

In den Figuren 3 und 4 ist eine erste Ausführungsform der erfindungsgemäßen Stegkappe 15 dargestellt. Die Stegkappe 15 aus elastomerem Material weist einen Fuß 24 auf. Dieser Fuß 24 erweitert sich zum Steg 14 hin und greift in Hinterschneidungen 25 des Stegs ein. Die Stegkappe 15 wird hierdurch zuverlässig gegen ein Abziehen von dem Steg 14 gesichert.

Zur weiteren Abziehsicherung ist der Steg 14 mit zwei im Querschnitt im wesentlichen keulenförmigen Ansätzen 26 versehen. Diese werden von der Stegkappe 15 umgriffen. Auf Grund des im wesentlichen keulenförmigen Querschnitts wirken die Ansätze 26 einem Abziehen der Stegkappe 15 entgegen.

Die Stegkappe 15 schließt sowohl an der Außenseite 27 als auch an der Innenseite 28 bündig mit dem Steg 14 ab. Hierdurch wird eine durchgehende glatte Oberfläche bereitgestellt, die den optischen Gesamteindruck wesentlich verbessert.

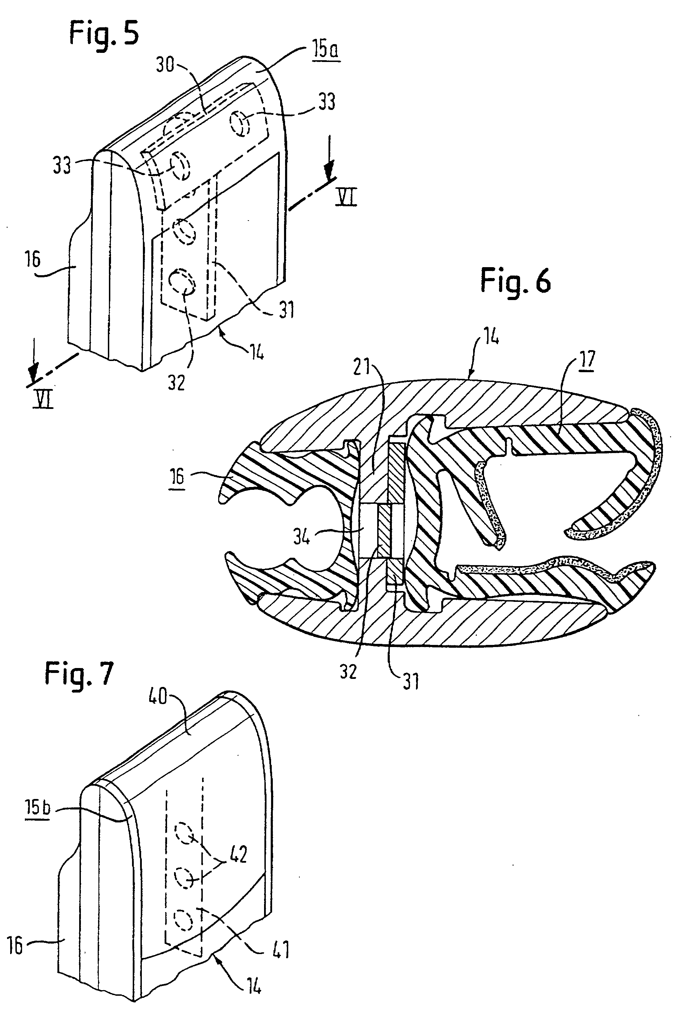

In den Figuren 5 und 6 ist eine weitere Ausführungsform einer erfindungsgemäßen Stegkappe 15a in einer Ansicht gemäß Figur 3 dargestellt. In die Stegkappe 15a ist ein Einsatz 30 einvulkanisiert. Dieser Einsatz 30 weist einen Rastfuß 31 zur Befestigung an dem Steg 14 auf. Der Einsatz 30 ist mit Ausnehmungen 33 zur Gewichtsverringerung versehen. Gleichzeit verbessern die Ausnehmungen 33 die Verbindung zwischen dem Einsatz 30 und der Stegkappe 15a.

Zur Befestigung ist an dem Rastfuß 31 eine elastisch bewegliche Rastzunge 32 angeordnet. Wie in Figur 6 dargestellt, greift diese Rastzunge 32 in montiertem Zustand der Stegkappe 15a in eine Ausnehmung 34 des Stegs 15 ein. Zur Montage wird die Stegkappe 15a von oben auf den Steg 14 aufgesetzt und anschließend nach unten bewegt. Die Rastzunge 32 rastet hierbei automatisch in die Ausnehmung 34 ein. Ein zusätzliches Montagewerkzeug ist nicht erforderlich. Die Stegkappe 15a ist nach dem Einrasten zuverlässig an dem Steg 14 befestigt.

Bei den Ausführungsformen gemäß den Figuren 1 bis 6 ist das Verankerungselement 24, 31 an der Stegkappe 15 befestigt.

Figur 7 zeigt eine dritte Ausführungsform einer erfindungsgemäßen Stegkappe 15b. Die Stegkappe 15b wird von einer Kappe 40 überdeckt und ist nur noch in ihrem Randbereich sichtbar. Die Kappe 40 schließt sich direkt an den Steg 14 an und ist aus Aluminium hergestellt. Hierdurch kann die Farbgebung der Kappe 40 an die des Stegs angepaßt werden, so daß für den Betrachter eine durchgehende einheitliche Oberfläche entsteht.

Zur Befestigung der Stegkappe 15b weist die Kappe 40 ein Verankerungselement 41 auf, das die Stegkappe 15b durchgreift. Das Verankerungselement 41 ist mit schematisch dargestellten Ausnehmungen 42 versehen. Diese Ausnehmungen 42 verringern das Gewicht des Verankerungselements 41. Zur Befestigung an dem Steg 14 kann, wie in Figur 5 dargestellt, eine Rastzunge verwendet werden. Alternativ kann das Verankerungselement 41 an dem Mittelbereich 21 des Stegs 14 festgeschraubt werden.

Bei sämtlichen Ausführungsformen der erfindungsgemäßen Stegkappe 15 sind die Verankerungselemente 24, 31, 41 gegenüber der Umgebung verdeckt und von der Außenseite her nicht sichtbar. Die Außenseite der Stegkappe 15 kann unabhängig von den Verankerungselementen 24, 31, 41 gestaltet und an den Steg 14 angepaßt werden. Daher wird eine sichere Verankerung der Stegkappe 15 bei verbessertem optischen Gesamteindruck erreicht.

## Patentansprüche

1. Stegkappe aus gummielastischem Material zum Abdichten eines Stegs (14), der zwischen zwei Scheiben (11, 12) einer rahmenlosen Tür (10) eines Kraftfahrzeugs angeordnet ist, gegenüber einer Türöffnung der Tür (10), wobei die Stegkappe (15, 15a, 15b) an der Stirnseite, des Stegs (14) angeordnet ist, **dadurch gekennzeichnet, daß** die Stegkappe (15) an der Außenseite (27) und/oder der Innenseite (28) der Tür (10) bündig mit dem Steg (14) abschließt, und daß die Stegkappe (15, 15a, 15b) mittels mindestens eines Verankerungselements (24; 31; 41) an dem Steg (14) befestigt ist, wobei das Verankerungselement (24; 31; 41) gegenüber der Umgebung verdeckt und an einem den Steg (14) versteifenden Mittelbereich (21) des Stegs (14) befestigt ist.

2. Stegkappe nach Anspruch 1, **dadurch gekennzeichnet, daß** das Verankerungselement ein Fuß (24) ist, der in Hinterschneidungen (25) des Stegs (14) eingreift.

3. Stegkappe nach Anspruch 1 oder 2, **dadurch gekennzeichnet, daß** der Steg (14) mit mindestens einem im Querschnitt im wesentlichen keulenförmigen Ansatz (26) versehen ist, der von der Stegkappe (15) umgriffen ist.

4. Stegkappe nach Anspruch 1, **dadurch gekennzeichnet, daß**, das Verankerungselement ein an dem Steg (14) befestigter Rastfuß (31) ist, der einen Einsatz (30) aufweist.

5. Stegkappe nach Anspruch 4, **dadurch gekennzeichnet, daß** der Rastfuß (31) eine elastisch bewegliche Rastzunge (32) aufweist, die in einer Ausnehmung (34) des Stegs (14) einrastet.

6. Stegkappe nach Anspruch 4 oder 5, **dadurch gekennzeichnet, daß** der Einsatz'(30) in die Stegkappe (15a) einvulkanisiert ist.

7. Stegkappe nach einem der Ansprüche 4 bis 6, **dadurch gekennzeichnet, daß** der Einsatz (30) mit Ausnehmungen (33) versehen ist.

8. Stegkappe nach Anspruch 1, **gekennzeichnet durch** eine Kappe (40), welche die Stegkappe (15b) überdeckt und mittels des Verankerungselements (41) an dem Steg (14) befestigt ist.

9. Stegkappe nach Anspruch 8, **dadurch gekennzeichnet, daß** das Verankerungselement (41) die Stegkappe (15b) durchgreift.

10. Stegkappe nach Anspruch 8 oder 9, **dadurch gekennzeichnet, daß** die Kappe (40) aus Metall, vorzugsweise Aluminium, hergestellt ist.

## Claims

1. An elastomeric web cap for sealing a web (14) arranged between two panes (11, 12) of a frameless door (10) of a motor vehicle with regard to an opening of the door (10), wherein the web cab (15, 15a, 15b) is arranged at the front of the web (14), **characterized in that** said web cap (15) connects flush with the web (14) at the outside (27) and/or the inside (28) of the door (10) and said web cap (15, 15a, 15b) is secured to said web (14) by at least one anchoring element (24; 31; 41), the anchoring element (24; 31; 41) being concealed from the environment and secured to a the web (14) reinforcing middle portion (21) of the web (14).

2. The web cap as set forth in claim 1, **characterized in that** that said anchoring element is a key (24) engaging undercuts (25) in said web (14).

3. The web cap as set forth in claim 1 or 2, **characterized in that** said web (14) is provided with at least one appendage (26) substantially lobed in cross-section which is clasped by said web cap (15).

4. The web cap as set forth in claim 1, **characterized in that** said anchoring element is a latching key (31) secured to said web (14) which includes an insert (30).

5. The web cap as set forth in claim 4, **characterized in that** said latching key (31) comprises a flexible latching tongue (32) which locks into place in a recess (34) of said web (14).

6. The web cap as set forth in claim 4 or 5, **characterized in that** said insert (30) is vulcanized in place in said web cap (15a).

7. The web cap as set forth in any of the claims 4 to 6, **characterized in that** said insert (30) is provided with openings (33).

8. The web cap as set forth in claim 1, **characterized in that** said web cap (15b) is covered by a cap (40) which is secured to said web (14) by means of an anchoring element (41).

9. The web cap as set forth in claim 8, **characterized in that** said anchoring element (41) penetrates said web cap (15b).

10. The web cap as set forth in claim 8 or 9, **characterized in that** said cap (40) is made of metal, preferably of aluminum.

## Revendications

1. Capuchon pour montant en matière présentant l'élasticité du caoutchouc pour étancher un montant (14), agencé entre deux plaques (11, 12) d'une porte (10) sans cadre d'un véhicule automobile, par rapport à une ouverture de la porte (10), le capuchon pour montant (15, 15a, 15b) étant agencé sur la face frontale du montant (14), **caractérisé en ce que** le capuchon pour montant (15) se termine en affleurement avec le montant (14) sur le côté extérieur (27) et/ou sur le côté intérieur (28) de la porte (10), et **en ce que** le capuchon pour montant (15, 15a, 15b) est fixé sur le montant (14) au moyen d'au moins un élément d'ancrage (24 ; 31 ; 41), l'élément d'ancrage (24 ; 31 ; 41) étant recouvert par rapport à l'entourage et étant fixé sur une zone centrale (21) du montant (14), laquelle rigidifie le montant (14).

2. Capuchon pour montant selon la revendication 1, **caractérisé en ce que** l'élément d'ancrage est un pied (24) qui s'engage dans des contre-dépouilles (25) du montant (14).

3. Capuchon pour montant selon l'une ou l'autre des revendications 1 et 2, **caractérisé en ce que** le montant (14) est pourvu d'au moins un talon (26) de section sensiblement en forme de lobe qui est entouré par le capuchon pour montant (14).

4. Capuchon pour montant selon la revendication 1, **caractérisé en ce que** l'élément d'ancrage est un pied d'enclenchement (31) qui est fixé sur le montant (14) et qui comprend un insert (30).

5. Capuchon pour montant selon la revendication 4, **caractérisé en ce que** le pied d'enclenchement (31) comprend une languette d'enclenchement (32) élastiquement mobile qui vient s'enclencher dans un évidement (34) du montant (14).

6. Capuchon pour montant selon l'une ou l'autre des revendications 4 et 5, **caractérisé en ce que** l'insert (30) est vulcanisé dans le capuchon pour montant (15a).

7. Capuchon pour montant selon l'une des revendications 4 à 6, **caractérisé en ce que** l'insert (30) est pourvu d'évidements (33).

8. Capuchon pour montant selon la revendication 1, **caractérisé par** un capuchon (40) qui recouvre le capuchon pour montant (15b) et qui est fixé sur le montant (14) au moyen de l'élément d'ancrage (41).

9. Capuchon pour montant selon la revendication 8, **caractérisé en ce que** l'élément d'ancrage (41) traverse le capuchon pour montant (15b).

10. Capuchon pour montant selon l'une ou l'autre des revendications 8 et 9, **caractérisé en ce que** le capuchon (40) est réalisé en métal, de préférence en aluminium.
